(19) Europäisches Patentamt
European Patent Office
Office européen des brevets

(11) EP 4 394 961 A1

(12) # EUROPEAN PATENT APPLICATION
published in accordance with Art. 153(4) EPC

(43) Date of publication:
**03.07.2024 Bulletin 2024/27**

(21) Application number: **23844061.4**

(22) Date of filing: **30.08.2023**

(51) International Patent Classification (IPC):
***H01M 8/18*** *(2006.01)*

(52) Cooperative Patent Classification (CPC):
Y02E 60/50

(86) International application number:
**PCT/CN2023/115989**

(87) International publication number:
**WO 2024/103909 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 CN 202211446542**

(71) Applicant: **Suzhou Rongke Power Co., Ltd.**
**Suzhou, Jiangsu 215299 (CN)**

(72) Inventors:
- **GAO, Xinliang**
  **Suzhou, Jiangsu 215299 (CN)**
- **WANG, Shiyu**
  **Suzhou, Jiangsu 215299 (CN)**
- **LI, Siyi**
  **Suzhou, Jiangsu 215299 (CN)**
- **JIANG, Shan**
  **Suzhou, Jiangsu 215299 (CN)**
- **SONG, Mingming**
  **Suzhou, Jiangsu 215299 (CN)**

(74) Representative: **Herrero & Asociados, S.L.**
**Edificio Aqua - Agustín de Foxá, 4-10**
**28036 Madrid (ES)**

(54) **ELECTROLYTE AND VANADIUM REDOX FLOW BATTERY**

(57) An electrolyte solution and an all-vanadium redox flow battery are disclosed. The electrolyte solution includes: a positive electrode electrolyte solution and a negative electrode electrolyte solution, the positive electrode electrolyte solution and the negative electrode electrolyte solution include chloride ions, sulfate ions and vanadium ions; both the positive electrode electrolyte solution and the negative electrode electrolyte solution satisfy: $2.9 \leq [c(Cl^-)+c(SO_4^{2-})]/c(V^{n+}) \leq 3.6$; the $c(Cl^-)$ represents a concentration of the chloride ions, the $c(SO_4^{2-})$ represents a concentration of the sulfate ions, and the $c(V^{n+})$ represents a concentration of the vanadium ions. When $Cl^-$, $SO_4^{2-}$ and $V^{n+}$ in the electrolyte solution meet the appropriate concentration relationship, the $Cl_2$ production rate can be greatly reduced, thereby reducing the corrosion of battery materials. A small amount of $Cl_2$ evolved can compensate for the oxidation of the battery electrode carbon felt, and protect the electrode carbon felt and reduce the risk level of chlorine-containing electrolytes operation environmental.

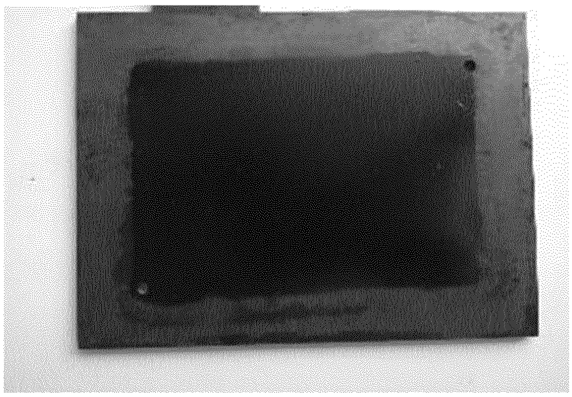

FIG. 2



Processed by Luminess, 75001 PARIS (FR)

## Description

This application claims priority to the Chinese Patent Application No. 202211446542.2 filed with the China Patent Office on November 21, 2022, entitled "Electrolyte Solutions and All-Vanadium Redox Flow Batteries", the entire content of which is incorporated herein by reference in its entirety.

TECHNICAL FIELD

The present disclosure relates to a technical field of electrolyte solution preparation, and specifically relates to an electrolyte solution and an all-vanadium redox flow battery.

BACKGROUND

The all-vanadium redox flow battery is a redox flow battery in which vanadium ions of different valences are used as positive and negative active substances, and the active substances are dissolved in the supporting electrolyte and present in a liquid circulating flow state. As one of the new energy storage batteries, the all-vanadium redox flow battery has the characteristics of large capacity, high safety, long life, and resource saving, and can be widely used in renewable energy power generation, grid peak shaving, smart micro-grid, backup power, and other fields. The electrolyte solution is the storage carrier of electrical energy in the all-vanadium redox flow battery system, and its performance directly affects the electrode life, energy density and efficiency, system cost and other indicators of the system, and is related to the reliability of the battery system.

The long-term stable operation of the all-vanadium redox flow battery system depends on two factors: the stability of the battery material and the stability of the electrolyte solution. Frequent high-SOC operation (overcharging) of the battery will cause the system electrode material to oxidize and lose conductivity; high SOC electrolytes are prone to crystallization or precipitation at high temperatures; for electrolytes containing high-concentration HCl systems, a large amount of $Cl_2$ evolution causes serious corrosion of battery-related materials and increasing system environmental risks. Therefore, reasonable control of chlorine gas generation during battery operation is an urgent problem to be solved.

TECHNICAL PROBLEM

This present disclosure provides an electrolyte solution that controls the amount of chlorine gas evolution by adjusting the concentration of chlorine ions in the electrolyte solution to solve the problem of excess chlorine gas evolution. Another object of the present disclosure is to provide an all-vanadium redox flow battery containing the above electrolyte solution.

TECHNICAL SOLUTIONS

In a first aspect, embodiments of the present disclosure provide an electrolyte solution, the electrolyte solution includes: a positive electrode electrolyte solution and a negative electrode electrolyte, the positive electrode electrolyte solution and negative electrode electrolyte solution include chloride ions, sulfate ions and vanadium ions; both the positive electrode electrolyte solution and the negative electrode electrolyte solution satisfy:

$$3.0 \leq [c(Cl^-)+c(SO_4^{2-})]/c(V^{n+}) \leq 3.6;$$

the $c(Cl^-)$ represents a concentration of the chloride ions, the $c(SO_4^{2-})$ represents a concentration of the sulfate ions, and the $c(V^{n+})$ represents a concentration of the vanadium ions.

In some embodiments,

the $c(Cl^-)$ satisfies: 1.5 mol/L$\leq c(Cl^-)\leq$6.5 mol/L; and/or
the $c(SO_4^{2-})$ satisfies: 0.5 mol/L$\leq c(SO_4^{2-})\leq$5.5 mol/L; and/or
the $c(V^{n+})$ satisfies: 1.6 mol/L$\leq c(V^{n+})\leq$2.65 mol/L.

In some embodiments, the $c(Cl^-)$ and the $c(SO_4^{2-})$ further satisfy:

$$0.4 \leq c(Cl^-)/c(SO_4^{2-}) \leq 3.1.$$

In some embodiments, the $c(Cl^-)$ and the $c(V^{n+})$ further satisfy:

$$0.5 \leq c(Cl^-)/c(V^{n+}) \leq 3.0.$$

In some embodiments, the positive electrode electrolyte solution further includes phosphate ions, and the positive electrode electrolyte solution further satisfies:

$$2.9 \leq [c(Cl^-)+c(SO_4^{2-})+c(PO_4^{3-})]/c(V^{n+}) \leq 3.7;$$

the $c(PO_4^{3-})$ represents a concentration of the phosphate ions.

In some embodiments, the $c(PO_4^{3-})$ further satisfies:

$$0.01\ mol/L \leq c(PO_4^{3-}) \leq 0.15\ mol/L;$$

and/or

$$0.02 \leq c\ (PO_4^{3-})/c(V^{n+}) \leq 0.06;$$

and/or

$$[c(Cl^-)+c(SO_4^{2-})+c(PO_4^{3-})-0.8 \times c(V^{n+})] \geq 4.2\ mol/L;$$

$0.8 \times c(V^{n+})$ represents an average molar concentration of acid group ions bound by the vanadium ions in the positive electrode electrolyte solution.

In some embodiments, the negative electrode electrolyte solution further includes phosphite ions, and the negative electrode electrolyte solution further satisfies:

$$2.9 \leq [c(Cl^-)+c(SO_4^{2-})+c(PO_3^{3-})]/c(V^{n+}) \leq 3.7;$$

the $c(PO_3^{3-})$ represents the concentration of the phosphite ions.

In some embodiments, the $c(PO_3^{3-})$ further satisfies:

$$0.01\ mol/L \leq c(PO_3^{3-}) \leq 0.15\ mol/L;$$

and/or

$$0.03 \leq c(PO_3^{3-})/c(V^{n+}) \leq 0.1;$$

and/or

$$[c(Cl^-)+c(SO_4^{2-})+c(PO_3^{3-})-1.5\times c(V^{n+})]\leq 4.5\ mol/L;$$

$1.5\times c(V^{n+})$ represents an average molar concentration of acid group ions bound by the vanadium ions in the negative electrode electrolyte solution.

In some embodiments, the positive electrode electrolyte solution and the negative electrode electrolyte solution further include an additive, and the positive electrode electrolyte solution and the negative electrode electrolyte solution further satisfy:

$$2.9\leq[c(Cl^-)+c(SO_4^{2-})+c(A)]/c(V^{n+})\leq 3.7;$$

the c(A) represents a concentration of the additive.

In some embodiments, the additive satisfies at least one of the following features:

(a) the concentration of the additive c(A) satisfies: $0.02 mol/L\leq c(A)\leq 0.2\ mol/L$;
(b) the additive is one or more additives containing -OH, -COOH or $-NH_2$ functional group.

In some embodiments, the temperature stability range of the electrolyte solution is -30~60°C.

In some embodiments, the chloride ions are provided by an acid or salt containing the chloride ions; the sulfate ions are provided by an acid or salt containing the sulfate; the vanadium ions are provided by a vanadate.

In a second aspect, embodiments of the present disclosure also provide an all-vanadium redox flow battery containing the above electrolyte solution.

BENEFICIAL EFFECTS

Compared with the prior art, the electrolyte solution of this disclosure includes: a positive electrode electrolyte solution and a negative electrode electrolyte, the positive electrode electrolyte solution and negative electrode electrolyte solution include chloride ions, sulfate ions and vanadium ions; both the positive electrode electrolyte solution and negative electrode electrolyte solution satisfy: $2.9\leq[c(Cl^-)+c(SO_4^{2-})]/c(V^{n+})\leq 3.6$; $c(Cl^-)$ represents the concentration of chloride ions, $c(SO_4^{2-})$ represents the concentration of sulfate ions, $c(V^{n+})$ represents the concentration of vanadium ions. When $Cl^-$, $SO_4^{2-}$ and $V^{n+}$ in the electrolyte solution meet the appropriate concentration relationship, the $Cl_2$ production rate can be greatly reduced, reducing the corrosion of battery materials. At the same time, a small amount of $Cl_2$ evolved can compensate for the oxidation of the battery electrode carbon felt, and the electrode The carbon felt protects and reduces the risk level of chlorine-containing electrolytes operation environmental.

BRIEF DESCRIPTION OF THE DRAWINGS

FIG. 1 is a flow chart of the preparation process of the all-vanadium redox flow battery electrolyte solution provided by some embodiments of the present disclosure;
FIG. 2 shows the electrode corrosion situation after using the electrolyte solution provided in Example 1;
FIG. 3 shows the electrode corrosion situation after using the electrolyte solution provided in Comparative Example 1.

DETAILED DESCRIPTION

The present disclosure provides an electrolyte solution and all-vanadium redox flow battery. In order to make the purpose, technical solutions and effects of the present disclosure clear and definite, the present disclosure will be further described in detail below with reference to the accompanying drawings and examples. It should be understood that the specific embodiments described herein are only used to explain the present disclosure and are not used to limit the present disclosure.

The applicant found that due to the high temperature (the temperature inside the container in tropical areas will exceed 50 degrees Celsius), in order to avoid easy precipitation of $V_2O_5$ by the positive electrode electrolyte solution at high temperatures, the temperature range of stable use of the electrolyte solution is narrowed, and the battery system

is equipped with auxiliary equipment for refrigeration, heating, and ventilation, which will consume power and reduce the overall efficiency of the battery system. Therefore, expanding the temperature range of safe use of the electrolyte solution can effectively reduce the cost of auxiliary equipment and its power consumption, and improve the overall efficiency while reducing the cost of the battery system. Moreover, once the heat exchange equipment fails, the high and low temperature resistance of the electrolyte solution itself is particularly important for the overall stability of the battery system. The higher the concentration of vanadium ions in the electrolyte, the higher the energy density of the corresponding system and the higher the cost performance, but the narrower the safe temperature range, the higher the risk of 5-valent vanadium precipitation at high temperatures. The temperature stable range of the traditional pure sulfuric acid system electrolyte solution is smaller, while the energy density of the mixed acid system electrolyte solution of sulfuric acid and hydrochloric acid is greatly improved, but it will produce harmful chlorine gas during battery operation. In addition, the low pressure in the plateau area causes the evolved $Cl_2$ to be difficult to dissolve back into the electrolyte solution. The highly volatile HCl in the solution is continuously circulated to the magnetic pump, resulting in the aggravation of gas binding, and shutdown of the pump leads to the lack of reactants in the battery and overcharging and burning. The evolution rate of $Cl_2$ is accelerated due to high $Cl^-$ concentration, and the pressure of the tank increases the risk of $Cl_2$ escaping from the system. How to reduce the amount of $Cl_2$ evolved while maintaining its high temperature performance is an urgent problem to be solved for mixed acid electrolytes. At the same time, its excessively high HCl concentration leads to serious low-temperature precipitation problems of the negative electrode trivalent solution (it is very easy to produce $VCl_3$ crystallization), blocking pipelines and causing the system to fail to operate, which affects the further industrialization of this technology. Therefore, for all-vanadium redox flow battery electrolyte, its reasonable control of $Cl_2$ evolution has become an urgent problem to be solved.

Based on the above problems, embodiments of the present disclosure provide an electrolyte solution for an all-vanadium redox flow battery. The electrolyte solution includes: a positive electrode electrolyte solution and a negative electrode electrolyte, the positive electrode electrolyte solution and negative electrode electrolyte solution include chloride ions, sulfate ions and vanadium ions; both the positive electrode electrolyte solution and negative electrode electrolyte solution satisfy:

$$2.9 \leq [c(Cl^-)+c(SO_4^{2-})]/c(V^{n+}) \leq 3.6;$$

$c(Cl^-)$ represents a concentration of chloride ions, $c(SO_4^{2-})$ represents a concentration of sulfate ions, and $c(V^{n+})$ represents a concentration of vanadium ions.

In some embodiments, $c(Cl^-)$ satisfies: 1.5 mol/L≤$c(Cl^-)$≤6.5 mol/L; the value of $c(Cl^-)$ can be any one or the range between any two of 1.5 mol/L, 2.0 mol/L, 2.5 mol/L, 3.0 mol/L, 3.5 mol/L, 4.0 mol/L, 4.5 mol/L, 5.5 mol/L, 6.0 mol/L and 6.5 mol/L. It is noted that the specific value of $c(Cl^-)$ is only given as an example, provided that any value or the range between any two values within the range of 1.5~6.5 mol/L is within the protection scope of this disclosure.

In some embodiments, $c(Cl^-)$ further satisfies: 2.5 mol/L≤$c(Cl^-)$≤5.5 mol/L; $c(Cl^-)$ further satisfies: 3.0 mol/L≤$c(Cl^-)$≤5.0 mol/L; $c(Cl^-)$ most preferably satisfies: 3.5 mol/L≤$c(Cl^-)$≤4.5 mol/L.

In some embodiments, $c(SO_4^{2-})$ satisfies: 0.5 mol/L≤$c(SO_4^{2-})$≤5.5 mol/L; the value of $c(SO_4^{2-})$ can be any one or the range between any two of 0.5 mol/L, 1.0 mol/L, 1.5 mol/L, 2.0 mol/L, 2.5 mol/L, 3.0 mol/L, 3.5 mol/L, 4.0 mol/L, 4.5 mol/L, 5.0 mol/L and 5.5 mol/L. It is noted that the specific value of $c(SO_4^{2-})$ is only given as an example, provided that any value or the range between any two values in the range of 0.5~5.5 mol/L is within the protection scope of this disclosure.

In some embodiments, $c(SO_4^{2-})$ further satisfies: 1.5 mol/L≤$c(SO_4^{2-})$≤4.5 mol/L; $c(SO_4^{2-})$ further satisfies: 1.5 mol/L≤$c(SO_4^{2-})$≤3.5 mol/L; $c(SO_4^{2-})$ most preferably satisfies: 1.5 mol/L≤$c(SO_4^{2-})$≤2.5 mol/L.

In some embodiments, $c(V^{n+})$ satisfies: 1.6 mol/L≤$c(V^{n+})$≤2.65 mol/L; the value of $c(V^{n+})$ can be any one or the range between any two of 1.6 mol/L, 1.7 mol/L, 1.8 mol/L, 1.9 mol/L, 2.0 mol/L, 2.1 mol/L, 2.2 mol/L, 2.3 mol/L, 2.4 mol/L, 2.5 mol/L, 2.6 mol/L. It is noted that the specific value of $c(V^{n+})$ is only given as an example, provided that any value or the range between any two values within the range of 1.6~2.65 mol/L is within the protection scope of this disclosure.

In some embodiments, under high SOC conditions, the $VO_2^+$ content is greater than 90%, and high-concentration $VO_2^+$ will react with Cl- at a certain rate to generate $Cl_2$. The reaction formula is: $2VO_2^+ + 2Cl^- + 4H^+ \rightarrow Cl_2 + 2VO^{2+} + 2H_2O$. It can be seen that chlorine gas will be produced under high SOC, and $Cl^-$ can improve the stability of $VO_2^+$ at high temperatures. However, after the range of $2.9 \leq [c(Cl^-)+c(SO_4^{2-})]/c(V^{n+}) \leq 3.6$ is limited, the generation amount of $Cl_2$ can be controlled within a certain range. At the same time, a certain amount of chlorine gas evolved can compensate for the oxidation of the battery electrode carbon felt and avoid the oxidation of the carbon felt electrode due to insufficient substrate $VO_2^+$ from overcharging. Based on the above principle, the battery charging open circuit voltage OCV can be expanded from 1.50V to 1.54V, and the system discharge energy density can be increased by more than 20%. In addition, under the controlled $Cl^-$ concentration of 1.5~6.5 mol/L, it will also avoid environmental dangers

caused by gas binding of the circulation pump and increase in system pressure due to high-rate evolution of $Cl_2$.

In some embodiments, $c(Cl^-)$ and $c(SO_4^{2-})$ further satisfy: $0.4 \le c(Cl^-)/c(SO_4^{2-}) \le 3.1$. It is noted that as long as the range of $c(Cl^-)/c(SO_4^{2-})$ is any value in the range of 0.4~3.1 or a range between any two values, it is within the protection scope of this disclosure. For the electrolyte, $Cl^-$ and $SO_4^{2-}$ are symbols of the mixed acid system, and the ratio between the two determines the stability of the electrolyte solution. When $Cl^-$ and $SO_4^{2-}$ coexist and reach the above ratio, on the one hand, HCl saturated vapor pressure can be reduced; on the other hand, since $SO_4^{2-}$ and $Cl^-$ can bind with $V^{n+}$ to form two salts with different spatial structures, it can alleviate the decrease in electrolyte solution stability caused by the structure of a single acid group bound with vanadium ions at high temperatures when it reaches the upper limit of solubility.

In some embodiments, $c(Cl^-)$ and $c(V^{n+})$ further satisfy: $0.5 \le c(Cl^-)/c(V^{n+}) \le 3.0$. It is noted that as long as the range of $c(Cl^-)/c(V^{n+})$ is any value in the range of 0.5~3.0 or a range between any two values, it is within the protection scope of this disclosure. For the electrolyte, the proportional relationship between $c(Cl^-)$ and $c(V^{n+})$ can further reflect the situation of chlorine precipitation. This is because under the appropriate ratio of $Cl^-$ and $V^{n+}$, after the $Cl^-$ bound by $V^{n+}$ is removed in the solution, there is still free $H^+$ to maintain the conductivity and solubility of the solution, so as to further maintain the battery efficiency and high-temperature stability of the battery. When the ratio of $Cl^-$ and $V^{n+}$ is within the above range, it can be ensured that $Cl^-$ has strong complexing ability, and there is still residual $Cl^-$ to provide $H^+$ and evolve a certain amount of chlorine gas, and the electrode is protected by a certain amount of chlorine gas evolved.

In some embodiments, the positive electrode electrolyte solution further includes phosphate ions, and the positive electrode electrolyte solution further satisfies: $2.9 \le [c(Cl^-)+c(SO_4^{2-})+c(PO_4^{3-})]/c(V^{n+}) \le 3.7$; $c(PO_4^{3-})$ represents the concentration of the phosphate ions. When $Cl^-$, $SO_4^{2-}$, $PO_4^{3-}$ and $V^{n+}$ in the electrolyte solution meet the above range, the electrolyte solution can protect the electrode performance, and the phosphate ions further improve the stability to $V^{n+}$, so as to greatly reduce the evolution rate of the chlorine gas. The stabilizing effect of phosphate ions on $V^{n+}$ is due to its binding with $[VO_2(H_2O)_3]^+$, which inhibits the deprotonation process of vanadium ions at high temperatures. The complexation reaction is:

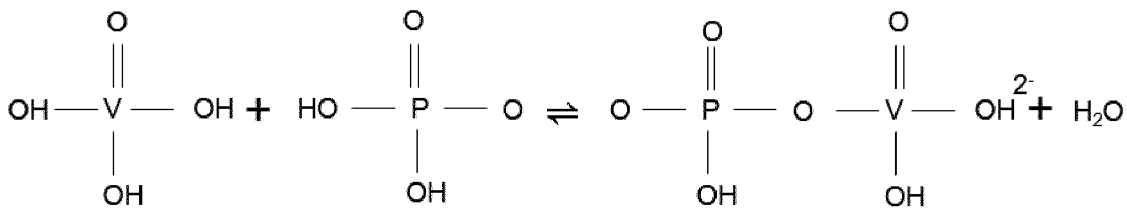

At the same time, at high temperatures, the HCl-containing electrolyte solution $Cl^-$ and $VO_2^+$ generate soluble $VO_2Cl$ to avoid the generation of insoluble $V_2O_5$. Under the control of the positive electrode relationship formula $2.9 \le [c(Cl^-)+c(SO_4^{2-})+c(PO_4^{3-})]/c(V^{n+}) \le 3.7$, low-concentration free HCl further reduces the $Cl_2$ production rate, which greatly reduces the corrosion resistance requirements of battery materials. At the same time, it reduces the risk level of the operation environment of the HCl-containing electrolyte, and the tolerance of HCl-containing batteries to plateau areas can be further improved.

In some embodiments, $c(PO_4^{3-})$ further satisfies: $0.01\ mol/L \le c(PO_4^{3-}) \le 0.15\ mol/L$; the value of $c(PO_4^{3-})$ can be any one or the range between any two of 0.01 mol/L, 0.02 mol/L, 0.03 mol/L, 0.04 mol/L, 0.05 mol/L, 0.06 mol/L, 0.07 mol/L, 0.08 mol/L, 0.09 mol/L, 0.10 mol/L/, 0.11 mol/L, 0.12 mol/L, 0.13 mol/L, 0.14 mol/L and 0.15 mol/L. It is noted that the specific value of $c(PO_4^{3-})$ is only given as an example, provided that any value or the range between any two values within the range of 0.01~0.15 mol/L is within the protection scope of this disclosure.

In some embodiments, $c(PO_4^{3-})$ further satisfies: $0.02 \le c\ (PO_4^{3-})/c(V^{n+}) \le 0.06$. By limiting the proportional relationship between $PO_4^{3-}$ and $V^{n+}$, excessive generation of insoluble $VOPO_4$ precipitation can be avoided, while too low $PO_4^{3-}$ cannot form an effective spatial configuration and results in no protective effect.

In some embodiments, $c(PO_4^{3-})$ further satisfies:

$[c(Cl^-)+c(SO_4^{2-})+c(PO_4^{3-})-0.8 \times c(V^{n+})] \ge 4.2\ mol/L$; $0.8 \times c(V^{n+})$ represents the average molar concentration of acid group ions bound by vanadium ions in the positive electrode electrolyte solution. When the above range is met, it can be ensured that after the total acid groups are bound by vanadium ions, there will still be a controllable concentration of free acid to provide H+ to ensure the high temperature solubility, stability and conductivity of the solution.

In some embodiments, the negative electrode electrolyte solution further includes phosphite ions, and the negative electrode electrolyte solution further satisfies: $2.9 \le [c(Cl^-)+c(SO_4^{2-})+c(PO_3^{3-})]/c(V^{n+}) \le 3.7$; $c(PO_3^{3-})$ represents the concentration of the phosphite ions. Since an excessively high H+ concentration in the solution will increase the risk of $V^{3+}$ precipitation, when the negative electrode solution satisfies the above formula, the $H^+$ provided by the free acid groups must meet this value range. At the same time, phosphite ions can stabilize trivalent vanadium ions at low

temperatures in the negative electrode of the electrolyte, and in the reducing environment of the negative electrode, phosphorous acid can exist stably without being oxidized.

In some embodiments, $c(PO_3^{3-})$ further satisfies: 0.01 mol/L≤$c(PO_3^{3-})$≤0.15 mol/L; the value of $c(PO_3^{3-})$ can be any one or the range between any two of 0.01 mol/L, 0.02 mol/L, 0.03 mol/L, 0.04 mol/L, 0.05 mol/L, 0.06 mol/L, 0.07 mol/L, 0.08 mol/L, 0.09 mol/L, 0.10 mol/L/, 0.11 mol/L, 0.12 mol/L, 0.13 mol/L, 0.14 mol/L and 0.15 mol/L. It is noted that the specific value of $c(PO_3^{3-})$ is only given as an example, provided that any value or the range between any two values within the range of 0.01~0.15 mol/L is within the protection scope of this disclosure.

In some embodiments, $c(PO_3^{3-})$ further satisfies: 0.03≤$c(PO_3^{3-})/c(V^{n-})$≤0.1; when $c(PO_3^{3-})$ and $c(V^{n+})$ meet the above range, the low-temperature stabilization effect of phosphite ions can be further improved to prevent excessive $PO_3^{3-}$ concentration from increasing the viscosity of the negative electrode solution and reducing the conductivity of the solution and increasing the electrochemical reaction resistance of the battery.

In some embodiments, $c(PO_3^{3-})$ further satisfies:
$[c(Cl^-)+c(SO_4^{2-})+c(PO_3^{3-})-1.5\times c(V^{n+})]\leq 4.5$ mol/L; $1.5\times c(V^{n+})$ represents the average molar concentration of acid group ions bound by vanadium ions in the negative electrode electrolyte solution. If the above range is satisfied, after the total acid groups in the solution are bound by vanadium ions, the $H^+$ precipitated by the remaining free acid groups is not enough to affect the stability of the vanadium ions.

In some embodiments, the positive electrode electrolyte solution and negative electrode electrolyte solution further include an additive, and the positive electrode electrolyte solution and negative electrode electrolyte solution further satisfy: $2.9\leq[c(Cl^-)+c(SO_4^{2-})+c(A)]/c(V^{n+})\leq 3.7$; c(A) represents a concentration of the additive.

In some embodiments, for the electrolyte solution system containing $Cl^-$, if the concentration of $Cl^-$ in the system is too high, a large amount of $Cl_2$ will be generated, and the additive cannot be added in the presence of the high concentration of $Cl_2$ because the additive is easily oxidized and decomposed, but the low-rate production of $Cl_2$ in this disclosure allows the additive to be added safely and exist stably. At the same time, the generation of $Cl_2$ of the electrolyte solution containing $Cl^-$ in the positive electrode compensates to protect the positive carbon felt electrode from oxidation. High charging capacity will bring the risk of high-temperature precipitation caused by the increase in positive SOC, and the addition of the additive can maintain stability and further avoid the danger caused by increasing the open circuit voltage.

In some embodiments, the additive satisfies: the concentration of additive c(A) satisfies: 0.02 mol/L≤c(A)≤0.2 mol/L; the value of c(A) can be any one or a range between any two of 0.02 mol/L, 0.05 mol/L, 0.1 mol/L, 0.15 mol/L and 0.2 mol/L. It is noted that the specific value of c(A) is only given as an example, provided that any value or the range between any two values within the range of 0.02~0.2 mol/L is within the protection scope of this disclosure.

In some embodiments, the additive is one or more of additives containing -OH, -COOH or $-NH_2$ functional group. When the $Cl^-$ concentration is in the range of 1.5~6.5 mol/L, the addition of the additive can effectively maintain high-temperature stability, and the temperature range is wider, and the battery operating temperature window can reach -15°C ~ 60°C. This is because -COOH or $-NH_2$ group can be adsorbed on the surface of vanadium ions or bound by vanadium ions, forming a structure with a three-dimensional effect, which enhances the repulsive force between vanadium hydrated ions and makes them more dispersed, thereby preventing vanadium ions from colliding with each other, inhibiting the generation of precipitation, and improving the stability of the electrolyte solution. The thermal stabilization mechanism is as follows:

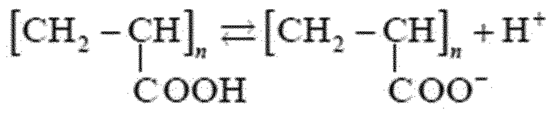

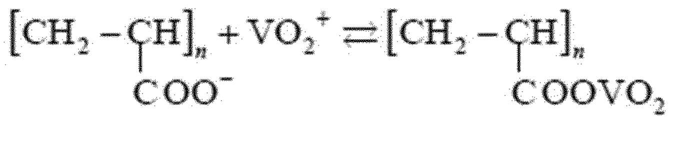

The increase in the effective hydroxyl functional group -OH can provide more active sites for electron transfer, so that the hydroxyl compound can effectively improve the electrochemical activity of the electrolyte solution. In addition, the additive can improve the reversibility of the $VO^{2+}/VO_2^+$ electrode process. -COOH or $-NH_2$ can improve the electron mass transfer process in the $VO^{2+}/VO_2^+$ electrode process, improve the electrochemical activity, increase the utilization rate of the electrolyte, and improve the battery efficiency and overall performance.

In some embodiments, the additive may include any one or a combination of more of glycerol, succinic acid, aminomethanesulfonic acid, methanesulfonic acid, glutamic acid, oxalic acid, etc.

In some embodiments, the temperature stability range of the electrolyte solution is -30~60°C. The temperature

stability range of the electrolyte solution is determined by the $Cl^-$ concentration. When the $Cl^-$ concentration is in the range of 1.5~6.5 mol/L, the temperature stability range of the electrolyte solution is widened to -30~60°C, which can greatly save investment in thermal management equipment, and reduce auxiliary power consumption and improve energy efficiency of the battery system. The preferred temperature stability range of the electrolyte solution is -15 ~ 60°C; the negative electrode electrolyte solution (trivalent solution) is stable for at least 7 days at an ambient temperature of -15°C; the positive electrode electrolyte solution (5-valent solution) is stable for at least 10 days at an ambient temperature of 60°C.

In some embodiments, the chloride ions are provided by a chloride ion-containing acid or salt; the sulfate ions are provided by a sulfate-containing acid or salt; the vanadium ions are provided by a vanadate.

In some embodiments, the chloride ions are provided by hydrochloric acid, the sulfate ions are provided by sulfuric acid, and the vanadium ions are provided by multi-stage purified ammonium vanadate.

All-vanadium redox flow battery

The all-vanadium redox flow energy storage battery includes a battery stack and an electrolyte solution storage tank. The battery stack and the liquid storage tank are connected by a liquid inlet pipeline and a liquid outlet pipeline. The liquid inlet pipeline is equipped with a circulation pump.

The battery stack consists of an ion diaphragm, guide plates, carbon felt electrodes, flow channel frames and fastening end plates in series.

The diaphragm of the battery:

Theoretically, only $H^+$ is allowed to pass through, and the cross-mixing of vanadium ions in different valence states in the positive and negative electrode electrolytes is inhibited. Therefore, a cation exchange membrane with good conductivity and selective permeability is preferred, and a perfluorosulfonic acid ion exchange membrane can also be used. Improving the hydrophilicity, selective permeability and service life of the ion exchange membrane is one of the ways to improve the efficiency of the vanadium battery.

Other battery materials:

To achieve large-capacity energy storage in an all-vanadium redox flow battery, several single cells must be connected in series or parallel. In this way, except for the terminal electrodes, basically all electrodes must be made into bipolar electrodes. Due to the strong oxidizing properties of $VO_2^+$ and the strong acidic property of the electrolyte solution containing sulfuric acid and hydrochloric acid, electrode materials for the vanadium battery must be resistant to strong oxidation and strong acidity, at the same time, they must have low resistance, good conductivity, high mechanical strength, good electrochemical property and other characteristics. The vanadium battery electrode materials are mainly carbon, such as graphite, carbon cloth, carbon felt, etc.; bipolar plates are mostly made of composite materials, such as conductive polymers, polymer composites, etc.

After the materials of each part of the battery stack are assembled in sequence, they are connected to the corresponding inlets and outlets of the positive and negative electrode electrolyte solution storage tanks, and the all-vanadium redox flow battery is assembled.

Example 1

Referring to FIG. 1, taking the multi-stage purified ammonium vanadate $(NH_4)x(VO_3)y$ as an example, it is calcined at 750°C for 5 hours to obtain high-purity vanadium pentoxide ($V_2O_5$), reducing gas ($NH_4$ or $H_2$) is continuously introduced, and it is calcined for 10 hours to obtain vanadium tetroxide ($V_2O_4$) or vanadium trioxide ($V_2O_3$). These two oxides are mixed in a ratio of 1:1 (trivalent and tetravalent oxides account for 50% each), sulfuric acid and hydrochloric acid are added to make a mixed acid electrolyte solution for the positive and negative electrodes of the all-vanadium redox flow battery.

The obtained mixed acid electrolyte solution includes a positive electrode electrolyte solution and a negative electrode electrolyte, and the positive electrode electrolyte solution is controlled to contain 1.9 mol $SO_4^{2-}$, 3.9 mol $Cl^-$ and 2.0 mol $V^{n+}$; the negative electrode electrolyte solution is controlled to contain 1.9 mol $SO_4^{2-}$, 3.9 mol $Cl^-$ and 2.0 mol $V^{n+}$.

Example 2

The specific preparation method is the same as that in Example 1, except that the preset ion concentration

ratio is different, so that the positive electrode electrolyte solution contains 1.9 mol $SO_4^{2-}$, 4.1 mol $Cl^-$ and 2.0 mol $V^{n+}$; the negative electrode electrolyte solution contains 1.9 mol $SO_4^{2-}$, 4.1 mol $Cl^-$ and 2.0 mol $V^{n+}$.

Example 3

The specific preparation method is the same as that in Example 1, except that the preset ion concentration ratio is different, so that the positive electrode electrolyte solution contains 1.9 mol $SO_4^{2-}$, 4.3 mol $Cl^-$ and 2.0 mol $V^{n+}$; the negative electrode electrolyte solution contains 1.9 mol $SO_4^{2-}$, 4.3 mol $Cl^-$ and 2.0 mol $V^{n+}$.

Example 4

The specific preparation method is the same as that in Example 1, except that the preset ion concentration ratio is different, so that the positive electrode electrolyte solution contains 1.9 mol $SO_4^{2-}$, 4.5 mol $Cl^-$ and 2.0 mol $V^{n+}$; the negative electrode electrolyte solution contains 1.9 mol $SO_4^{2-}$, 4.5 mol $Cl^-$ and 2.0 mol $V^{n+}$.

Example 5

The specific preparation method is the same as that in Example 1, except that the preset ion concentration ratio is different, so that the positive electrode electrolyte solution contains 1.9 mol $SO_4^{2-}$, 4.7 mol $Cl^-$ and 2.0 mol $V^{n+}$; the negative electrode electrolyte solution contains 1.9 mol $SO_4^{2-}$, 4.7 mol $Cl^-$ and 2.0 mol $V^{n+}$.

Example 6

The specific preparation method is the same as that in Example 1, except that the preset ion concentration ratio is different, so that the positive electrode electrolyte solution contains 1.9 mol $SO_4^{2-}$, 4.9 mol $Cl^-$ and 2.0 mol $V^{n+}$; the negative electrode electrolyte solution contains 1.9 mol $SO_4^{2-}$, 4.9 mol $Cl^-$ and 2.0 mol $V^{n+}$.

Example 7

The specific preparation method is the same as that in Example 1, except that the preset ion concentration ratio is different, so that the positive electrode electrolyte solution contains 1.9 mol $SO_4^{2-}$, 5.1 mol $Cl^-$ and 2.0 mol $V^{n+}$; the negative electrode electrolyte solution contains 1.9 mol $SO_4^{2-}$, 5.1 mol $Cl^-$ and 2.0 mol $V^{n+}$.

Example 8

The specific preparation method is the same as that in Example 1, except that the preset ion concentration ratio is different, so that the positive electrode electrolyte solution contains 1.9 mol $SO_4^{2-}$, 5.3 mol $Cl^-$ and 2.0 mol $V^{n+}$; the negative electrode electrolyte solution contains 5.3 mol $SO_4^{2-}$, 4.7 mol $Cl^-$ and 2.0 mol $V^{n+}$.

Example 9

The specific preparation method is the same as that in Example 1, except that the preset ion concentration ratio is different, so that the positive electrode electrolyte solution is controlled to contain 1.3 mol $SO_4^{2-}$, 4.0 mol $Cl^-$ and 1.8 mol $V^{n+}$; the negative electrode electrolyte solution contains 1.3 mol $SO_4^{2-}$, 4.0 mol $Cl^-$ and 1.8 mol $V^{n+}$.

Example 10

The specific preparation method is the same as that in Example 1, except that the preset ion concentration ratio is different, so that the positive electrode electrolyte solution contains 1.8 mol $SO_4^{2-}$, 4.0 mol $Cl^-$ and 1.8 mol $V^{n+}$; the negative electrode electrolyte solution contains 1.8 mol $SO_4^{2-}$, 4.0 mol $Cl^-$ and 2.0 mol $V^{n+}$.

Example 11

The specific preparation method is the same as that in Example 1, except that the preset ion concentration ratio is different, so that the positive electrode electrolyte solution contains 2.1 mol $SO_4^{2-}$, 4.0 mol $Cl^-$ and 1.8 mol $V^{n+}$; the negative electrode electrolyte solution contains 2.1 mol $SO_4^{2-}$, 4.0 mol $Cl^-$ and 2.0 mol $V^{n+}$.

Example 12

The specific preparation method is the same as that in Example 1, except that the preset ion concentration ratio is different, so that the positive electrode electrolyte solution contains 2.4 mol $SO_4^{2-}$, 4.0 mol $Cl^-$ and 1.8 mol $V^{n+}$; the negative electrode electrolyte solution contains 2.4 mol $SO_4^{2-}$, 4.0 mol $Cl^-$ and 2.0 mol $V^{n+}$.

Example 13

The specific preparation method is the same as that in Example 1, except that the preset ion concentration ratio is different, so that the positive electrode electrolyte solution contains 2.2 mol $SO_4^{2-}$, 4.5 mol $Cl^-$ and 1.87 mol $V^{n+}$; the negative electrode electrolyte solution contains 2.2 mol $SO_4^{2-}$, 4.5 mol $Cl^-$ and 1.87 mol $V^{n+}$.

Example 14

The specific preparation method is the same as that in Example 1, except that the preset ion concentration ratio is different, so that the positive electrode electrolyte solution contains 2.2 mol $SO4^{2-}$, 4.5 mol $Cl^-$ and 1.95 mol $V^{n+}$; the negative electrode electrolyte solution contains 2.2mol $SO_4^{2-}$, 4.5mol $Cl^-$ and 1.95mol $V^{n+}$.

Example 15

The specific preparation method is the same as that in Example 1, except that the preset ion concentration ratio is different, so that the positive electrode electrolyte solution contains 2.2 mol $SO_4^{2-}$, 4.5 mol $Cl^-$ and 2.05 mol $V^{n+}$; the negative electrode electrolyte solution contains 2.2 mol $SO_4^{2-}$, 4.5 mol $Cl^-$ and 2.05 mol $V^{n+}$.

Example 16

The specific preparation method is the same as that in Example 1, except that the preset ion concentration ratio is different, so that the positive electrode electrolyte solution contains 2.2 mol $SO_4^{2-}$, 4.5 mol $Cl^-$ and 2.20 mol $V^{n+}$; the negative electrode electrolyte solution contains 2.2 mol $SO_4^{2-}$, 4.5 mol $Cl^-$ and 2.20 mol $V^{n+}$.

Example 17

The specific preparation method is the same as that in Example 1, except that the preset ion concentration ratio is different, so that the positive electrode electrolyte solution contains 2.2 mol $SO_4^{2-}$, 4.5 mol $Cl^-$ and 2.30 mol $V^{n+}$; the negative electrode electrolyte solution contains 2.2 mol $SO_4^{2-}$, 4.5 mol $Cl^-$ and 2.30 mol $V^{n+}$.

Example 18

The specific preparation method is the same as that in Example 1, except that the preset ion concentration ratio is different, so that the positive electrode electrolyte solution contains 3.2 mol $SO4^{2-}$, 1.5 mol $Cl^-$ and 1.6 mol $V^{n+}$; the negative electrode electrolyte solution contains 3.2 mol $SO_4^{2-}$, 1.5 mol $Cl^-$ and 1.6 mol $V^{n+}$.

Example 19

The specific preparation method is the same as that in Example 1, except that the preset ion concentration ratio is different, so that the positive electrode electrolyte solution contains 2.5 mol $SO4^{2-}$, 6.5 mol $Cl^-$ and 2.6 mol $V^{n+}$; the negative electrode electrolyte solution contains 2.5 mol $SO_4^{2-}$, 6.5 mol $Cl^-$ and 2.6 mol $V^{n+}$.

Example 20

The specific preparation method is the same as that in Example 1, except that the preset ion concentration ratio is different, so that the positive electrode electrolyte solution contains 2.2 mol $SO_4^{2-}$, 2.5 mol $Cl^-$ and 1.60 mol $V^{n+}$; the negative electrode electrolyte solution contains 2.2 mol $SO_4^{2-}$, 2.5 mol $Cl^-$ and 2.20 mol $V^{n+}$.

Example 21

The specific preparation method is the same as that in Example 1, except that the preset ion concentration ratio is different, so that the positive electrode electrolyte solution contains 4.0 mol $SO4^{2-}$, 4.5 mol $Cl^-$ and 2.65 mol $V^{n+}$;

the negative electrode electrolyte solution contains 4.0 mol $SO_4^{2-}$, 4.5 mol $Cl^-$ and 2.65 mol $V^{n+}$.

Example 22

The specific preparation method is the same as that in Example 1, except that the preset ion concentration ratio is different, and $PO_4^{3-}$ is added to the positive electrode electrolyte, so that the positive electrode electrolyte solution contains 1.9 mol $SO_4^{2-}$, 3.9 mol $Cl^-$, 0.04 mol $PO_4^{3-}$ and 2.0mol $V^{n+}$; the negative electrode electrolyte solution is controlled to contain 1.9 mol $SO_4^{2-}$, 3.9 mol $Cl^-$ and 2.0 mol $V^{n+}$.

Example 23

The specific preparation method is the same as that in Example 1, except that the preset ion concentration ratio is different, and $PO_4^{3-}$ is added to the positive electrode electrolyte, so that the positive electrode electrolyte solution contains 1.9 mol $SO_4^{2-}$, 3.9 mol $Cl^-$, 0.08 mol $PO_4^{3-}$ and 2.0mol $V^{n+}$; the negative electrode electrolyte solution is controlled to contain 1.9 mol $SO_4^{2-}$, 3.9 mol $Cl^-$ and 2.0 mol $V^{n+}$.

Example 24

The specific preparation method is the same as that in Example 1, except that the preset ion concentration ratio is different, and $PO_4^{3-}$ is added to the positive electrode electrolyte, so that the positive electrode electrolyte solution contains 1.9 mol $SO_4^{2-}$, 5.3 mol $Cl^-$, 0.12 mol $PO_4^{3-}$ and 2.0mol $V^{n+}$; the negative electrode electrolyte solution is controlled to contain 1.9 mol $SO_4^{2-}$, 3.9 mol $Cl^-$ and 2.0 mol $V^{n+}$.

Example 25

The specific preparation method is the same as that in Example 1, except that the preset ion concentration ratio is different, and $PO_3^{3-}$ is added to the negative electrode electrolyte, so that the positive electrode electrolyte solution contains 1.9 mol $SO_4^{2-}$, 3.9 mol $Cl^-$, and 2.0 mol $V^{n+}$; t the negative electrode electrolyte solution is controlled to contain 1.9 mol $SO_4^{2-}$, 3.9 mol $Cl^-$ , 0.06 mol $PO_3^{3-}$ and 2.0 mol $V^{n+}$.

Example 26

The specific preparation method is the same as that in Example 1, except that the preset ion concentration ratio is different, and $PO_3^{3-}$ is added to the negative electrode electrolyte, so that the positive electrode electrolyte solution contains 1.9 mol $SO_4^{2-}$, 3.9 mol $Cl^-$, and 2.0 mol $V^{n+}$; the negative electrode electrolyte solution is controlled to contain 1.9 mol $SO_4^{2-}$, 3.9 mol $Cl^-$ , 0.13 mol $PO_3^{3-}$ and 2.0 mol $V^{n+}$.

Example 27

The specific preparation method is the same as that in Example 1, except that the preset ion concentration ratio is different, and $PO_3^{3-}$ is added to the negative electrode electrolyte, so that the positive electrode electrolyte solution contains 1.9 mol $SO_4^{2-}$, 5.3 mol $Cl^-$, and 2.0 mol $V^{n+}$; the negative electrode electrolyte solution is controlled to contain 1.9 mol $SO_4^{2-}$, 5.3 mol $Cl^-$ , 0.2 mol $PO_3^{3-}$ and 2.0 mol $V^{n+}$.

Example 28

The specific preparation method is the same as that in Example 1, except that the preset ion concentration ratio is different, and the additive glycerol is added to the electrolyte, so that the positive electrode electrolyte solution contains 1.9 mol $SO_4^{2-}$, 3.9 mol $Cl^-$, 2.0 mol $V^{n+}$ and 0.02 mol glycerol; the negative electrode electrolyte solution is controlled to contain 1.9 mol $SO_4^{2-}$ , 3.9 mol $Cl^-$, and 2.0 mol $V^{n+}$.

Example 29

The specific preparation method is the same as that in Example 1, except that the preset ion concentration ratio is different, and the additive succinic acid is added to the electrolyte, so that the positive electrode electrolyte solution contains 1.9 mol $SO_4^{2-}$, 5.3 mol $Cl^-$, 2.0 mol $V^{n+}$ and 0.2 mol succinic acid; the negative electrode electrolyte solution is controlled to contain 1.9 mol $SO_4^{2-}$, 5.3 mol $Cl^-$, 2.0 mol $V^{n+}$ and 0.02 mol succinic acid.

Example 30

The specific preparation method is the same as that in Example 1, except that the preset ion concentration ratio is different, so that the positive electrode electrolyte solution contains 2.0 mol $SO_4^{2-}$, 4.6 mol $Cl^-$ and 2.25 mol $V^{n+}$; the negative electrode electrolyte solution contains 2.11 mol $SO_4^{2-}$, 4.33 mol $Cl^-$ and 1.8 mol $V^{n+}$.

Comparative example 1

The specific preparation method is the same as that in Example 1, except that no chlorine is added, so that the positive electrode electrolyte solution contains 1.9 mol $SO_4^{2-}$ and 2.0 mol $V^{n+}$; the negative electrode electrolyte solution is controlled to contain 1.9 mol $SO_4^{2-}$ and 2.0 mol $V^{n+}$.

Comparative example 2

The specific preparation method is the same as that in Example 1, except that the preset ion concentration ratio is different, so that the positive electrode electrolyte solution contains 1.9 mol $SO_4^{2-}$, 2.5 mol $Cl^-$ and 2.0 mol $V^{n+}$; the negative electrode electrolyte solution is controlled to contain 1.9 mol $SO_4^{2-}$, 2.5 mol $Cl^-$ and 2.0 mol $V^{n+}$.

Comparative example 3

The specific preparation method is the same as that in Example 1, except that the preset ion concentration ratio is different, so that the positive electrode electrolyte solution contains 1.9 mol $SO_4^{2-}$, 6.5 mol $Cl^-$ and 2.0 mol $V^{n+}$; the negative electrode electrolyte solution is controlled to contain 1.9 mol $SO_4^{2-}$, 6.5 mol $Cl^-$ and 2.0 mol $V^{n+}$.

Comparative example 4

The specific preparation method is the same as that in Example 1, except that the preset ion concentration ratio is different, so that the positive electrode electrolyte solution contains 0.488 mol $SO_4^{2-}$, 6.898 mol $Cl^-$ and 2.56 mol $V^{n+}$; the negative electrode electrolyte solution contains 0.615 mol $SO_4^{2-}$, 7.655mol $Cl^-$ and 1.941 mol $V^{n+}$.

The performance of the electrolytes of Examples 1-31 and Comparative examples 1-4 is tested or the electrolytes are prepared into all-vanadium redox flow batteries and the performance of the batteries is tested. See Tables 1 to 3 for specific test data.

The tests of all-vanadium redox flow batteries include the followings.

Battery efficiency test: A 5W single battery is used, and a mode of constant current charging + constant voltage charging + constant current discharging is used. The current density of the constant current charging is 110 $mA/cm^2$, the cut-off voltage is 1.6 V, and then constant voltage charging is performed at a voltage of 1.6 V, until the open circuit voltage of the battery is 1.54 V. Finally, the constant current discharging is performed at a constant current of 110 $mA/cm^2$ to a cut-off voltage of 1 V.

EE=discharging Wh/charging Wh×100%; CE=discharging Ah/charging Ah×100%.

$Cl_2$ evolution rate test: for a single battery with different active materials ratios, NaOH solution is used to collect the gas in the upper layer of the positive electrode electrolyte solution after two charging and discharging cycles, then ion chromatography is used to test the $Cl^-$ concentration in the NaOH collection solution, and the $Cl_2$ production rate in a unit time is obtained.

Accelerated test of electrode corrosion: a 5W single battery is used, and a mode of constant current charging + constant voltage charging + constant current discharging is used. The current density of the constant current charging is 110 $mA/cm^2$, the cut-off voltage is 1.8 V, and then constant voltage charging is performed at a voltage of 1.8 V, until the open circuit voltage of the battery is 1.7 V. Finally, the constant current discharging is performed at a constant current of 110 $mA/cm^2$ to a cut-off voltage of 1 V.

After 50 cycles of charging and discharging, an AC impedance instrument was used to test the resistance change of the battery at the end of the discharging and the battery was opened to observe the corrosion of the electrodes.

Table 1

| | $[c(Cl^-) + c(SO_4^{2-})] / c(V^{n+})$ | $c(Cl^-) / c(SO_4^{2-})$ | $c(Cl^-) / c(V^{n+})$ | $[c(Cl^-) + c(SO_4^{2-}) + c(PO_4^{3-})] / c(V^{n+})$ | $[c(Cl^-) + c(SO_4^{2-}) + c(PO_3^{3-})] / c(V^{n+})$ | $[c(Cl^-) + c(SO_4^{2-}) + c(A)] / c(V^{n+})$ |
|---|---|---|---|---|---|---|
| Example 1 | 2.9 | 2.05 | 1.95 | / | / | / |
| Example 2 | 3 | 2.15 | 2.05 | / | / | / |
| Example 3 | 3.1 | 2.26 | 2.15 | / | / | / |
| Example 4 | 3.2 | 2.36 | 2.25 | / | / | / |
| Example 5 | 3.3 | 2.47 | 2.35 | / | / | / |
| Example 6 | 3.4 | 2.57 | 2.45 | / | / | / |
| Example 7 | 3.5 | 2.68 | 2.55 | / | / | / |
| Example 8 | 3.6 | 2.78 | 2.65 | / | / | / |
| Example 9 | 2.94 | 3.07 | 2.22 | / | / | / |
| Example 10 | 3.22 | 2.22 | 2.22 | / | / | / |
| Example 11 | 3.38 | 1.90 | 2.22 | / | / | / |
| Example 12 | 3.55 | 1.66 | 2.22 | / | / | / |
| Example 13 | 3.58 | 2.04 | 2.40 | / | / | / |
| Example 14 | 3.43 | 2.04 | 2.30 | / | / | / |
| Example 15 | 3.26 | 2.04 | 2.19 | / | / | / |
| Example 16 | 3.04 | 2.04 | 2.04 | / | / | / |
| Example 17 | 2.91 | 2.04 | 1.95 | / | / | / |
| Example 18 | 2.93 | 0.46 | 0.93 | / | / | / |
| Example 19 | 3.46 | 2.6 | 2.5 | / | / | / |
| Example 20 | 2.93 | 1.13 | 1.56 | / | / | / |
| Example 21 | 3.20 | 1.12 | 1.69 | / | / | / |
| Example 22 | / | 2.05 | 1.95 | 2.92 | / | / |
| Example 23 | / | 2.05 | 1.95 | 2.94 | / | / |
| Example 24 | / | 2.78 | 2.65 | 3.66 | / | / |
| Example 25 | / | 2.05 | 1.95 | / | 2.93 | / |
| Example 26 | / | 2.05 | 1.95 | / | 2.96 | / |
| Example 27 | / | 2.78 | 2.65 | / | 3.7 | / |
| Example 28 | / | 2.05 | 1.95 | / | / | 2.91 |
| Example 29 | / | 2.78 | 2.65 | / | / | 3.7 |
| Example 30 | 2.93/3.58 | 2.3/2.1 | 2.1/2.4 | / | / | / |
| Comparative example 1 | 0.95 | / | / | / | / | / |
| Comparative example 2 | 2.2 | 1.31 | 1.25 | / | / | / |
| Comparative example 3 | 4.15 | 3.61 | 3.25 | / | / | / |
| Comparative example 4 | 2.88/4.26 | 14.1/12.4 | 2.6/3.9 | / | / | / |

Table 2

| | Battery internal resistance change/mS2 | Results of accelerated test of electrode corrosion | $Cl_2$ production rate mg/L/day | Energy efficiency EE/% | Energy density/Wh/L |
|---|---|---|---|---|---|
| Example 1 | 80 | Slight | 0.15 | 81.9 | 22.1 |
| Example 2 | 109 | Slight | 0.24 | 82.2 | 24.8 |
| Example 3 | 43 | No corrosion | 0.65 | 84.2 | 25.3 |
| Example 4 | 38 | No corrosion | 0.93 | 85.5 | 27.1 |
| Example 5 | 42.5 | No corrosion | 1.2 | 86.1 | 28.2 |
| Example 6 | 53 | No corrosion | 1.15 | 86.6 | 28.7 |
| Example 7 | 37 | No corrosion | 1.45 | 85.9 | 28.3 |
| Example 8 | 39 | No corrosion | 1.95 | 86.3 | 28.1 |
| Example 9 | 78 | Slight corrosion | 1.1 | 84.3 | 25.4 |
| Example 10 | 36 | No corrosion | 0.98 | 86.5 | 28.7 |
| Example 11 | 48 | No corrosion | 1.3 | 86.8 | 28.4 |
| Example 12 | 58 | No corrosion | 1.28 | 85.8 | 28.1 |
| Example 13 | 39 | No corrosion | 1.16 | 86.6 | 28.5 |
| Example 14 | 45 | No corrosion | 1.08 | 87.1 | 29.5 |
| Example 15 | 43 | No corrosion | 0.95 | 87.0 | 29.8 |
| Example 16 | 43 | No corrosion | 0.87 | 86.1 | 29.9 |
| Example 17 | 46 | No corrosion | 0.77 | 85.3 | 28.9 |
| Example 18 | 102 | Slight corrosion | 0.13 | 87.6 | 20.8 |
| Example 19 | 44 | No corrosion | 3.65 | 86.2 | 28.6 |
| Example 20 | 93 | Slight corrosion | 0.08 | 83.8 | 27.4 |
| Example 21 | 55 | No corrosion | 0.89 | 85.5 | 30.6 |
| Example 22 | 32 | No corrosion | 1.34 | 86.9 | 29.5 |
| Example 23 | 49 | No corrosion | 1.13 | 86.2 | 29.0 |
| Example 24 | 40 | No corrosion | 3.73 | 86.8 | 28.8 |
| Example 25 | 32 | No corrosion | 1.77 | 86.8 | 27.9 |
| Example 26 | 31 | No corrosion | 1.52 | 85.8 | 29.6 |
| Example 27 | 42 | No corrosion | 2.59 | 87.2 | 30.6 |
| Example 28 | 39 | No corrosion | 0.99 | 86 | 28.3 |
| Example 29 | 51 | No corrosion | 2.37 | 86.6 | 29.2 |
| Example 30 | 39 | No corrosion | 1.2 | 86.31 | 29.38 |
| Comparative example 1 | 898 | Serious corrosion | 0 | 78.9 | 21.3 |
| Comparative example 2 | 1136 | Serious corrosion | 0 | 80.6 | 25.0 |
| Comparative example 3 | 44 | No corrosion | 2.66 | 86.8 | 29.6 |
| Comparative example 4 | 38 | No corrosion | 3.2 | 84.54 | 26.88 |

Table 3

| | Positive electrode volume/mL | Negative electrode volume/mL | Current density/mA/cm$^2$ | Voltage range/V | Cutoff OCV/V | CE/% |
|---|---|---|---|---|---|---|
| Example 30 | 100 | 100 | 110 | 1~1.6 | 1.55 | 96.76 |
| Comparative example 4 | 100 | 100 | 110 | 1~1.6 | 1.55 | 96.25 |
| | EE/% | VE/% | Energy density/Wh/L | Energy attenuation rate/% | Electrolyte solution utilization rate/% | |
| Example 30 | 86.31 | 89.2 | 29.38 | 5.68 | 89.16 | |
| Comparative example 4 | 84.54 | 87.83 | 26.88 | 8.7 | 88.86 | |

Referring to Table 1 and Table 2, it can be seen that for Examples 1-8 and Comparative Examples 1-3, when the concentrations of vanadium ions and sulfate ions remain unchanged, the production amount of $Cl_2$ gradually increases with the increase of the chloride ion concentration, but at the same time, it has a significant protective effect on the electrode. Referring further to FIGs. 2-3, the electrode corrosion conditions of Comparative Example 1 and Example 1 are shown, respectively. It can be seen from the FIGs. that when no chloride ions are added to the electrolyte, the electrode corrosion is serious, and when the concentration of chloride ions is 3.9~5.3mol and the range of $[c(Cl^-)+c(SO_4^{2-})]/c(V^{n+})$ is 2.9-3.6, the electrode can be protected by a small amount of chlorine gas generated. However, when the concentration of chloride ions in the electrolyte solution is too high and the range of $[c(Cl^-)+c(SO_4^{2-})]/c(V^{n+})$ is out of 2.9-3.6, as in Comparative Example 4, the rate of chlorine gas production is too high, gas binding will occur, making it difficult to control the chlorine gas in the battery system, which will affect the performance of the battery.

Regarding Examples 9-12, when the concentrations of vanadium ions and chloride ions remain unchanged, the energy density of the battery gradually increases with the increase of the concentration of sulfate ions, and the energy efficiency increases. When the concentration of sulfate ions increases to 2.1 mol/L, the energy density no longer increases significantly, and the change in energy efficiency is also close to stable.

Regarding Examples 13-17, when the concentrations of sulfate ions and chloride ions remain unchanged, the energy density of the battery gradually increases with the increase of the concentration of vanadium ions, but when the concentration of vanadium ions increases to 2.2 mol/L, the upward trend becomes flat. It can be seen that the increase in viscosity caused by the concentration of vanadium ions increases the concentration polarization of the solution, making it difficult to further increase the energy density. At the same time, it can be seen from the energy efficiency that after the concentration of vanadium ions reaches 2.1 mol/L, the efficiency appears an inflection point and begins to decrease.

Referring to Table 3, for Example 30 and Comparative Example 4, it can be seen that: when the $V^{n+}$ concentration in the mixed acid solution is too high, that is, when it cannot meet the range of $2.9 \leq [c(Cl^-)+c(SO_4^{2-})]/c(V^{n+}) \leq 3.6$, the mass transfer resistance caused by the increase in viscosity of the solution cannot continue to increase the energy density of the solution. At the same time, the further increase of $Cl^-$ results in the evolution of a large amount of $Cl_2$, which makes the system circulation pump severely gas bound and difficult to operate stably.

The electrolyte solution and all-vanadium redox flow battery provided by the embodiments of this disclosure have been introduced in detail above. Specific examples are used in this disclosure to illustrate the principles and implementation of this disclosure. The description of the above embodiments is only to help understand the technical solution and its core ideas of this disclosure. Those skilled in the art should understand that they can still modify the technical solutions recorded in the foregoing embodiments, or make equivalent substitutions for some of the technical features. However, these modifications or substitutions do not cause the essence of the corresponding technical solutions to depart from the scope of the technical solutions of the embodiments of the present disclosure.

## Claims

1. An electrolyte solution, **characterized in that** the electrolyte solution comprises: a positive electrode electrolyte solution and a negative electrode electrolyte solution, the positive electrode electrolyte solution and the negative electrode electrolyte solution comprise chloride ions, sulfate ions and vanadium ions; both the positive electrode

electrolyte solution and the negative electrode electrolyte solution satisfy:

$$2.9 \leq [c(Cl^-)+c(SO_4^{2-})]/c(V^{n+}) \leq 3.6;$$

wherein the $c(Cl^-)$ represents a concentration of the chloride ions, the $c(SO_4^{2-})$ represents a concentration of the sulfate ions, and the $c(V^{n+})$ represents a concentration of the vanadium ions.

2. The electrolyte solution according to claim 1, **characterized in that** the $c(Cl^-)$ satisfies: 1.5 mol/L$\leq c(Cl^-) \leq$6.5 mol/L.

3. The electrolyte solution according to claim 1, **characterized in that** the $c(Cl^-)$ satisfies: 2.5 mol/L$\leq c(Cl^-) \leq$5.5 mol/L.

4. The electrolyte solution according to claim 1, **characterized in that** the $c(Cl^-)$ satisfies: 3.0 mol/L$\leq c(Cl^-) \leq$5.0 mol/L.

5. The electrolyte solution according to claim 1, **characterized in that** the $c(Cl^-)$ satisfies: 3.5 mol/L$\leq c(Cl^-) \leq$4.5 mol/L.

6. The electrolyte solution according to any one of claims 1 to 5, **characterized in that** the $c(Cl^-)$ and the $c(V^{n+})$ further satisfy: $0.5 \leq c(Cl^-)/c(V^{n+}) \leq 3.0$.

7. The electrolyte solution according to any one of claims 1 to 6, **characterized in that** the $c(SO_4^{2-})$ satisfies: 0.5 mol/L$\leq c(SO_4^{2-}) \leq$5.5 mol/L.

8. The electrolyte solution according to any one of claims 1 to 7, **characterized in that** the $c(V^{n+})$ satisfies: 1.6 mol/L$\leq c(V^{n+}) \leq$2.65 mol/L.

9. The electrolyte solution according to any one of claims 1 to 8, **characterized in that** the $c(Cl^-)$ and the $c(SO_4^{2-})$ further satisfy: $0.4 \leq c(Cl^-)/c(SO_4^{2-}) \leq 3.1$.

10. The electrolyte solution according to any one of claims 1 to 9, **characterized in that** the positive electrode electrolyte solution further comprises phosphate ions, and the positive electrode electrolyte solution further satisfies: $2.9 \leq [c(Cl^-)+c(SO4^{2-})+c(PO4^{3-})]/c(V^{n+}) \leq 3.7$; wherein the $c(PO_4^{3-})$ represents a concentration of the phosphate ions.

11. The electrolyte solution according to claim 10, **characterized in that** the $c(PO_4^{3-})$ further satisfies at least one of the following features:

a) 0.01 mol/L$\leq c(PO_4^{3-}) \leq$0.15 mol/L;
b) $0.02 \leq c\ (PO_4^{3-})/c(V^{n+}) \leq 0.06$;
c) $[c(Cl^-)+c(SO_4^{2-})+c(PO_4^{3-})-0.8 \times c(V^{n+})] \geq$4.2 mol/L;

wherein $0.8 \times c(V^{n+})$ represents an average molar concentration of acid group ions bound by the vanadium ions in the positive electrode electrolyte solution.

12. The electrolyte solution according to any one of claims 1 to 11, **characterized in that** the negative electrode electrolyte solution further comprises phosphite ions, and the negative electrode electrolyte solution further satisfies: $2.9 \leq [c(Cl^-)+c(SO_4^{2-})+c(PO_3^{3-})]/c(V^{n+}) \leq 3.7$; wherein the $c(PO_3^{3-})$ represents a concentration of the phosphite ions.

13. The electrolyte solution according to claim 12, **characterized in that** the $c(PO_3^{3-})$ further satisfies at least one of the following features:

d) 0.01 mol/L$\leq c(PO_3^{3-}) \leq$0.15 mol/L;
e) $0.03 \leq c(PO_3^{3-})/c(V^{n+}) \leq 0.1$;
f) $[c(Cl^-)+c(SO_4^{2-})+c(PO_3^{3-})-1.5 \times c(V^{n+})] \leq$4.5 mol/L;

wherein $1.5 \times c(V^{n+})$ represents an average molar concentration of acid group ions bound by the vanadium ions in the negative electrode electrolyte solution.

14. The electrolyte solution according to any one of claims 1 to 13, **characterized in that** the positive electrode electrolyte solution and the negative electrode electrolyte solution further comprise an additive, and the positive electrode

electrolyte solution and the negative electrode electrolyte solution further satisfy: $2.9 \leq [c(Cl^-)+c(SO_4^{2-})+c(A)]/c(V^{n+}) \leq 3.7$; wherein the c(A) represents a concentration of the additive.

**15.** The electrolyte solution according to claim 14, **characterized in that** the additive satisfies at least one of the following features:

g) the concentration of the additive c(A) satisfies: $0.02\ mol/L \leq c(A) \leq 0.2 mol/L$;
h) the additive is one or more of additives containing -OH, -COOH, or $-NH_2$ functional group.

**16.** The electrolyte solution according to any one of claims 1 to 15, **characterized in that** a temperature stability range of the electrolyte solution is -30~60°C.

**17.** The electrolyte solution according to any one of claims 1 to 16, **characterized in that** the chloride ions are provided by an acid or salt containing the chloride ions; the sulfate ions are provided by an acid or salt containing the sulfate; the vanadium ions are provided by a vanadate.

**18.** An all-vanadium redox flow battery, **characterized in that** the all-vanadium redox flow battery comprises the electrolyte solution according to any one of claims 1-17.

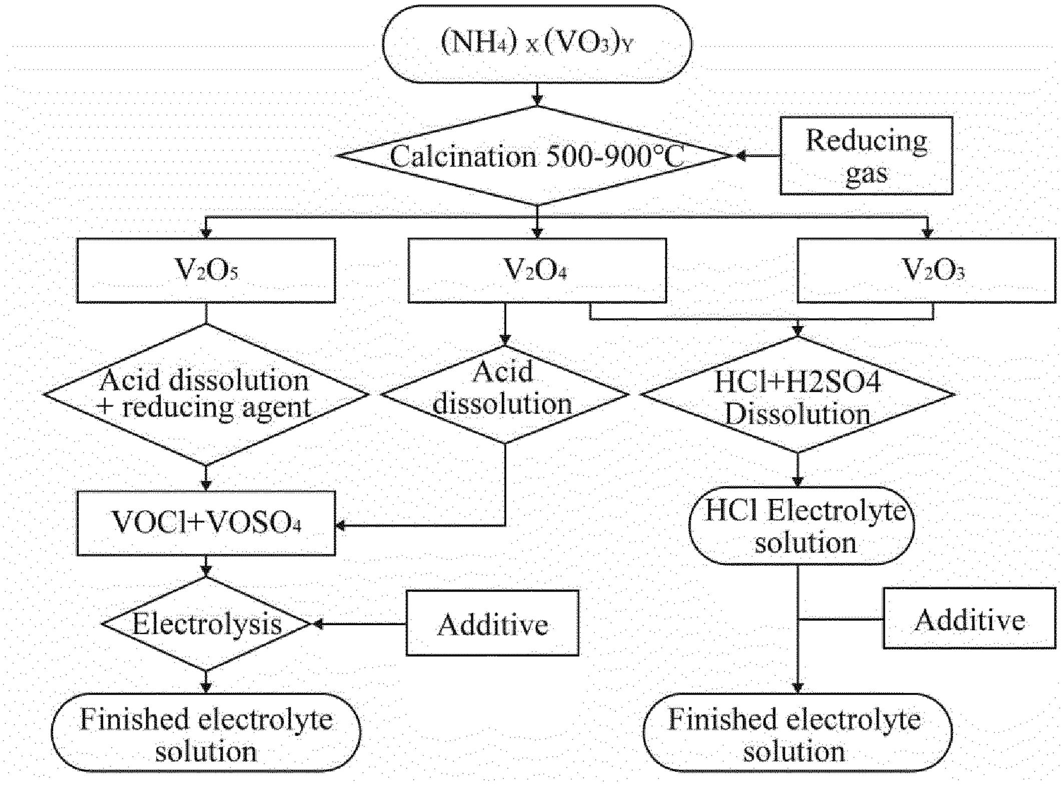

(NH4) x (VO3)Y
Calcination 500-900°C
Reducing gas
V2O5
V2O4
V2O3
Acid dissolution + reducing agent
Acid dissolution
HCl+H2SO4 Dissolution
VOCl+VOSO4
HCl Electrolyte solution
Electrolysis
Additive
Additive
Finished electrolyte solution
Finished electrolyte solution


FIG. 1

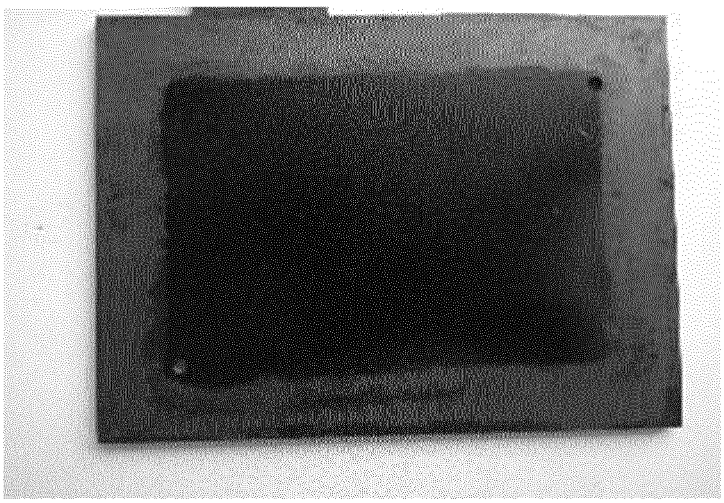

FIG. 2

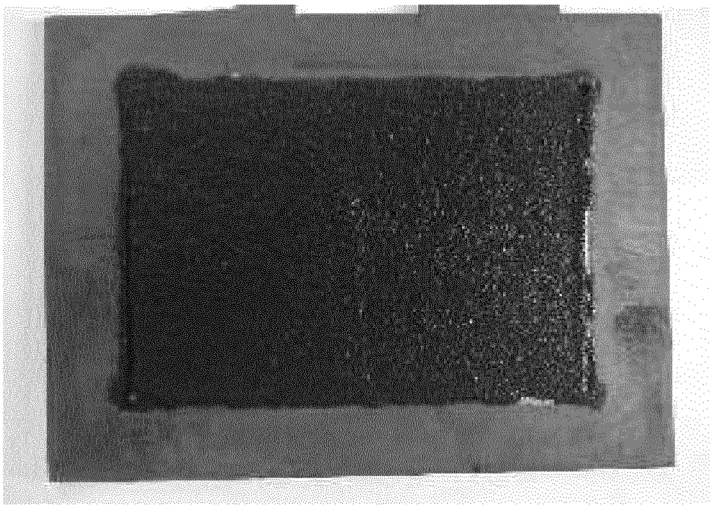

FIG. 3

**INTERNATIONAL SEARCH REPORT**

International application No.
**PCT/CN2023/115989**

**A. CLASSIFICATION OF SUBJECT MATTER**

H01M8/18(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 苏州融科储能, 液流电池, 电解液, 正极, 负极, 氯离子, 硫酸根离子, 钒离子, 浓度, liquid flow battery, electrolyte, anode, cathode, chlorine ion, sulfate ion, vanadium ion

**C. DOCUMENTS CONSIDERED TO BE RELEVANT**

| Category* | Citation of document, with indication, where appropriate, of the relevant passages | Relevant to claim No. |
|---|---|---|
| PX | CN 115498232 A (SUZHOU RONGKE POWER CO., LTD.) 20 December 2022 (2022-12-20) description, paragraphs [0002]-[0100] | 1-18 |
| X | CN 103125041 A (BATTELLE MEMORIAL INSTITUTE) 29 May 2013 (2013-05-29) description, paragraphs [0007]-[0100] | 1-9, 16-18 |
| Y | CN 103125041 A (BATTELLE MEMORIAL INSTITUTE) 29 May 2013 (2013-05-29) description, paragraphs [0007]-[0100] | 10-15 |
| X | CN 107069066 A (HENAN HONGKANG OPTICAL TECHNOLOGY CO., LTD.) 18 August 2017 (2017-08-18) description, paragraphs [0008]-[0025] | 1-9, 16-18 |
| Y | CN 107069066 A (HENAN HONGKANG OPTICAL TECHNOLOGY CO., LTD.) 18 August 2017 (2017-08-18) description, paragraphs [0008]-[0025] | 10-15 |
| Y | CN 104300168 A (DALIAN INSTITUTE OF CHEMICAL PHYSICS, CHINESE ACADEMY OF SCIENCES) 21 January 2015 (2015-01-21) description, paragraphs [0003]-[0026] | 10-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 September 2023** | **06 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/115989**

**C. DOCUMENTS CONSIDERED TO BE RELEVANT**

| Category* | Citation of document, with indication, where appropriate, of the relevant passages | Relevant to claim No. |
|---|---|---|
| A | CN 102881931 A (TSINGHUA UNIVERSITY) 16 January 2013 (2013-01-16) entire document | 1-18 |
| A | CN 107078330 A (BATTELLE MEMORIAL INSTITUTE) 18 August 2017 (2017-08-18) entire document | 1-18 |

Form PCT/ISA/210 (second sheet) (July 2022)

**INTERNATIONAL SEARCH REPORT**
**Information on patent family members**

International application No.
**PCT/CN2023/115989**

| Patent document cited in search report | | | Publication date (day/month/year) | Patent family member(s) | | | Publication date (day/month/year) |
|---|---|---|---|---|---|---|---|
| CN | 115498232 | A | 20 December 2022 | CN | 115498232 | B | 03 February 2023 |
| CN | 103125041 | A | 29 May 2013 | US | 2012077079 | A1 | 29 March 2012 |
| | | | | US | 8628880 | B2 | 14 January 2014 |
| | | | | CA | 2812928 | A1 | 12 April 2012 |
| | | | | CA | 2812928 | C | 27 February 2018 |
| | | | | KR | 20130122626 | A | 07 November 2013 |
| | | | | JP | 2018032632 | A | 01 March 2018 |
| | | | | JP | 6581635 | B2 | 25 September 2019 |
| | | | | US | 2014234753 | A1 | 21 August 2014 |
| | | | | US | 9077011 | B2 | 07 July 2015 |
| | | | | US | 2012107660 | A1 | 03 May 2012 |
| | | | | KR | 20150091179 | A | 07 August 2015 |
| | | | | JP | 2013543217 | A | 28 November 2013 |
| | | | | JP | 6266344 | B2 | 24 January 2018 |
| | | | | EP | 2622675 | A1 | 07 August 2013 |
| | | | | EP | 2622675 | A4 | 25 June 2014 |
| | | | | AU | 2011312833 | A1 | 07 March 2013 |
| | | | | AU | 2011312833 | B2 | 04 December 2014 |
| | | | | WO | 2012047320 | A1 | 12 April 2012 |
| | | | | US | 2015380757 | A1 | 31 December 2015 |
| | | | | US | 9819039 | B2 | 14 November 2017 |
| | | | | US | 2014199607 | A1 | 17 July 2014 |
| | | | | US | 9123931 | B2 | 01 September 2015 |
| CN | 107069066 | A | 18 August 2017 | CN | 107069066 | B | 08 September 2020 |
| CN | 104300168 | A | 21 January 2015 | | None | | |
| CN | 102881931 | A | 16 January 2013 | | None | | |
| CN | 107078330 | A | 18 August 2017 | KR | 20170057453 | A | 24 May 2017 |
| | | | | KR | 102410425 | B1 | 17 June 2022 |
| | | | | EP | 3204976 | A1 | 16 August 2017 |
| | | | | EP | 3204976 | A4 | 14 March 2018 |
| | | | | JP | 2017535035 | A | 24 November 2017 |
| | | | | JP | 6650444 | B2 | 19 February 2020 |
| | | | | WO | 2016057423 | A1 | 14 April 2016 |
| | | | | CA | 2958909 | A1 | 14 April 2016 |
| | | | | CA | 2958909 | C | 02 May 2023 |
| | | | | BR | 112017005398 | A2 | 12 December 2017 |
| | | | | BR | 112017005398 | B1 | 29 March 2022 |
| | | | | US | 2020259200 | A1 | 13 August 2020 |
| | | | | US | 11532832 | B2 | 20 December 2022 |
| | | | | US | 2016099480 | A1 | 07 April 2016 |
| | | | | US | 10673090 | B2 | 02 June 2020 |
| | | | | AU | 2015328395 | A1 | 16 March 2017 |
| | | | | AU | 2015328395 | B2 | 07 May 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211446542